# EUROPEAN PATENT APPLICATION

(11) **EP 4 552 896 A1**
(43) Date of publication of application: **14.05.2025**
(21) Application number: 24208565.2
(22) Date of filing: 24.10.2024
(51) Int. Cl.: B60L 3/00, B60L 50/14, B60L 50/51, B60L 53/10, B60L 53/16, B60L 53/30, B60L 53/35, B60L 53/66, B62D 25/24, H01R 13/447, B60K 15/05

(54) **BATTERY ELECTRIC VEHICLE**

(30) Priority: 02.11.2023 JP 2023188326
(71) Applicant: TOYOTA JIDOSHA KABUSHIKI KAISHA, Aichi-ken, 471-8571 (JP)
(72) Inventor: KOBAYASHI, Shunya, Toyota-shi, 471-8571 (JP)
(74) Representative: TBK

(57) **Abstract**

A battery electric vehicle (2) includes a controller (6), a battery (5) and a plurality of charging ports (22). Each of the charging ports (22) allows a charging plug (91) of a charging apparatus (90) to be connected. The charging apparatus (90) is configured to supply electric power to the battery (5). Each of the charging ports (22) is provided with a flap (23). The controller (6) is configured to, while the flap (23) of any one of the charging ports (22) is open, lock the flap (23) of each of the remaining charging ports (22).

## Description

### BACKGROUND OF THE INVENTION

### 1. Field of the Invention

The disclosure of the specification relates to a battery electric vehicle.

### 2. Description of Related Art

A battery electric vehicle includes an electric motor that drives wheels and a battery that supplies electric power to the electric motor. A battery electric vehicle capable of charging a battery from an external power supply includes a charging port for connection with a charging plug of the power supply. The battery electric vehicle described in Japanese Unexamined Patent Application Publication No. 2022-039337 (JP 2022-039337 A) includes a plurality of charging ports. Each of the charging ports is provided with a flap. In the battery electric vehicle of JP 2022-039337 A, when the plurality of flaps is open, a controller of the battery electric vehicle prohibits charging for ensuring safety.

### SUMMARY OF THE INVENTION

In the battery electric vehicle of JP 2022-039337 A, the plurality of flaps can be open at the same time. When the plurality of flaps is configured not to be open at the same time, it is possible to ensure further high safety.

A battery electric vehicle described in the specification includes a battery and a plurality of charging ports. Each of the charging ports allows a charging plug of a charging apparatus to be connected. The charging apparatus is configured to supply electric power to the battery. Each of the charging ports is provided with a flap. The controller is configured to, while the flap of any one of the charging ports is open, lock the flap of each of the remaining charging ports. In the battery electric vehicle described in the specification, the plurality of flaps is not open at the same time, so high safety is ensured.

The details of the disclosure of the specification and further improvements will be described in "Detailed Description of Embodiments".

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view of a battery electric vehicle according to an embodiment;
FIG. 2 is a side view of the battery electric vehicle according to the embodiment;
FIG. 3 is a flowchart of flap control that is executed by a controller of the battery electric vehicle according to the embodiment; and
FIG. 4 is a flowchart of a modification of flap control.

### DETAILED DESCRIPTION OF EMBODIMENTS

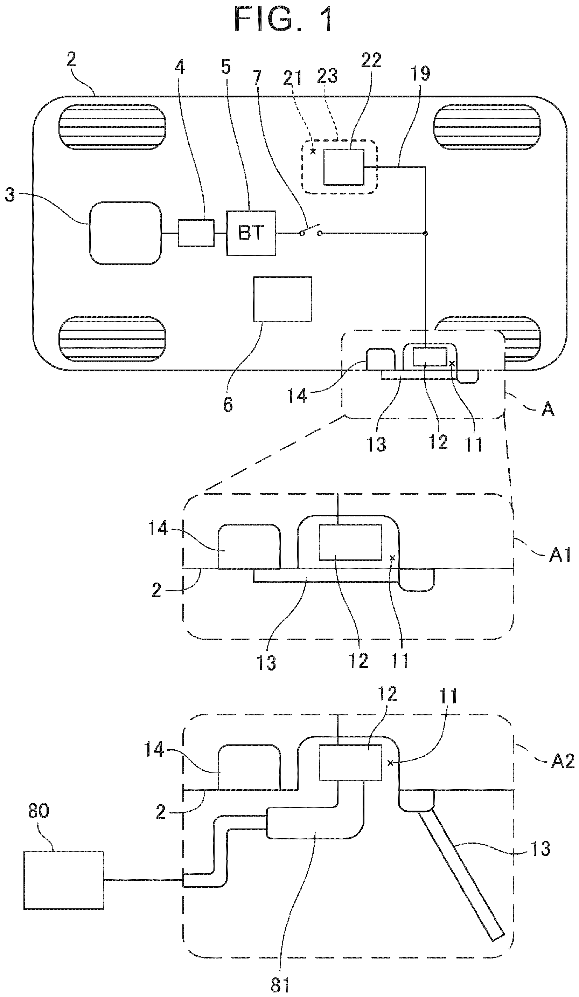

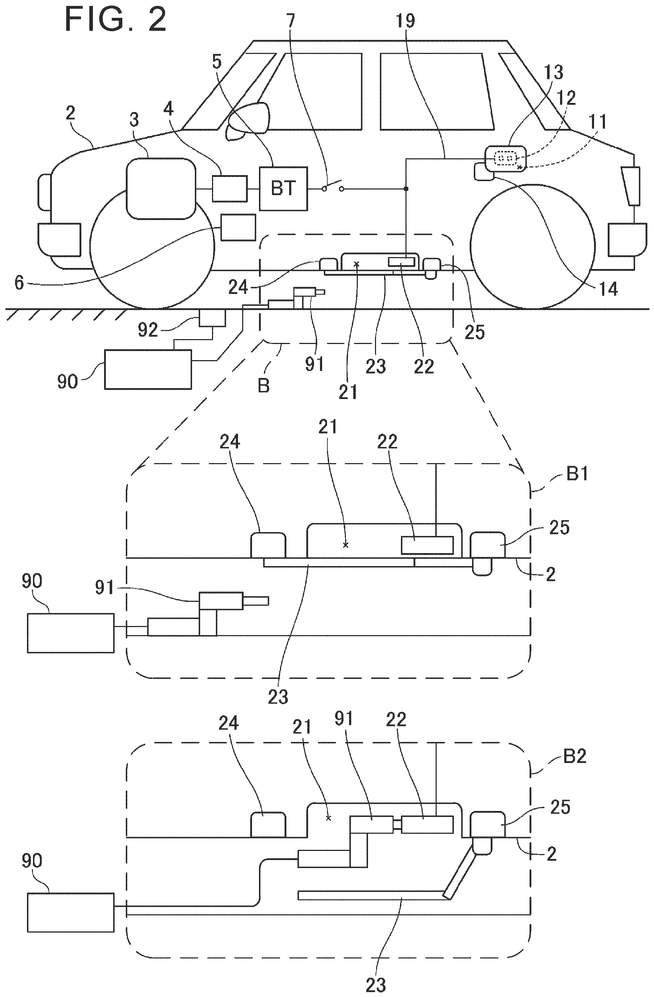

A battery electric vehicle 2 according to an embodiment will be described with reference to the accompanying drawings. FIG. 1 is a plan view of the battery electric vehicle 2. FIG. 2 is a side view of the battery electric vehicle 2.

The battery electric vehicle 2 includes an electric motor 3 that drives wheels, an inverter 4, a battery 5, and a controller 6. The battery 5 supplies electric power to the electric motor 3. Direct-current power from the battery 5 is converted to alternating-current power by the inverter 4 and then supplied to the electric motor 3. A step-up converter can be connected between the battery 5 and the inverter 4.

The battery 5 is allowed to be charged by a power supply outside the battery electric vehicle 2. The battery electric vehicle 2 includes a plurality of charging ports (a first charging port 12 and a second charging port 22). The first charging port 12 and the second charging port 22 are connected to the battery 5 via a common power cable 19 and a relay 7. Once a charging plug of the external power supply is connected to the first charging port 12 or the second charging port 22 and the relay 7 is closed, electric power from the external power supply is supplied to the battery 5. In other words, the battery 5 is charged by the external power supply.

The first charging port 12 is provided on a side face of the battery electric vehicle 2. More specifically, a recess 11 is provided on the side face of the battery electric vehicle 2, and the first charging port 12 is disposed in the recess 11. The opening of the recess 11 is closed by a flap 13. The flap 13 can be opened and closed. In other words, the flap 13 opens or closes the first charging port 12. The flap 13 is provided with a lock mechanism 14. The lock mechanism 14 is capable of holding the flap 13 in a closed state (that is, a locked state). In the locked state, a user is not able to open the flap 13. Once the lock is released, the user is able to open the flap 13. Hereinafter, releasing the lock may be referred to as unlock. The controller 6 controls the lock mechanism 14 to place the flap 13 in the locked state or an unlocked state.

An example of the lock mechanism 14 is as follows. A ring is provided on the inner side of the flap 13, and a hook is provided at a vehicle body. The hook projects or retracts with respect to the ring with an actuator. When the hook engages with the ring, the flap 13 is locked. In other words, the user is not able to open the flap 13. When the hook disengages from the ring, the lock of the flap 13 is released. In other words, the user is able to open the flap 13. The hook projects or retracts by, for example, a solenoid. The hook projects or retracts in response to a command from the controller 6. In other words, the controller 6 can control the lock and unlock of the flap 13.

The lock mechanism 14 includes a sensor that detects the status (an open state or a closed state) of the flap 13. The controller 6 can learn whether the flap 13 is open or closed through data from the sensor of the lock mechanism 14.

An enlarged view of a dashed line rectangle A in FIG. 1 is shown in a rectangle A1 and a rectangle A2. The rectangle A1 shows a state where the flap 13 of the first charging port 12 is closed. The rectangle A2 shows a state where the flap 13 is open and a charging plug 81 is connected to the first charging port 12. When the flap 13 is in the unlocked state, the user is able to open the flap 13. The user opens the flap 13 and plugs the charging plug 81 of an external power supply 80 in the first charging port 12. Once the controller 6 closes the relay 7, electric power is supplied from the external power supply 80 to the battery 5 via the charging plug 81, the first charging port 12, the common power cable 19, and the relay 7. In other words, the battery 5 is charged with electric power from the external power supply 80.

The second charging port 22 will be described. The second charging port 22 is provided on a bottom face of the battery electric vehicle 2. More specifically, a recess 21 is provided on the bottom face of the battery electric vehicle 2, and the second charging port 22 is disposed in the recess 21. The opening of the recess 21 is closed by a flap 23. The flap 23 can be opened and closed. In other words, the flap 23 opens or closes the second charging port 22. The flap 23 includes a lock mechanism 24 and an actuator 25. The lock mechanism 24 is capable of holding the flap 23 in a closed state (that is, a locked state). In the locked state, the user is not able to open the flap 23. The structure of the lock mechanism 24 may be the same as the structure of the lock mechanism 14.

The actuator 25 opens or closes the flap 23. The flap 23 (actuator 25) opens or closes in response to a command from the controller 6. In other words, the flap 23 (actuator 25) opens or closes by remote operation of the controller 6.

The controller 6 controls the lock mechanism 24 to place the flap 23 in the locked state or an unlocked state. The lock mechanism 24 includes a sensor that detects the status (an open state or a closed state) of the flap 23. The controller 6 can learn whether the flap 23 is open or closed through data from the sensor of the lock mechanism 24.

The user is able to plug a charging plug 81 in the first charging port 12. On the other hand, the external power supply 90 can automatically connect the charging plug 91 to the second charging port 22.

An enlarged view of a dashed line rectangle B in FIG. 2 is shown in a rectangle B1 and a rectangle B2. The rectangle B1 shows a state where the flap 23 of the second charging port 22 is closed. The rectangle B2 shows a state where the flap 23 is open and the charging plug 91 is connected to the second charging port 22.

The external power supply 90 is equipped with a vehicle position sensor 92. Once the battery electric vehicle 2 stops at a predetermined position, the vehicle position sensor 92 provides notification to the external power supply 90. The external power supply 90 transmits a charging command to the controller 6 of the battery electric vehicle 2. The controller 6 that has received the charging command transmits a command to the lock mechanism 24 to unlock the flap 23. Subsequently, the controller 6 transmits a command to the actuator 25 to open the flap 23. In other words, the flap 23 is opened by the actuator 25 in response to communication (communication related to execution of charging) from the external power supply 90 to the controller 6.

The external power supply 90 that has detected that the flap 23 is open moves the charging plug 91 and connects the charging plug 91 to the second charging port 22. The external power supply 90 includes an actuator (not shown) that moves the charging plug 91.

Once the charging plug 91 is connected to the second charging port 22, the controller 6 closes the relay 7. On the other hand, the external power supply 90 outputs electric power. Electric power from the external power supply 90 is supplied to the battery 5 through the charging plug 91, the second charging port 22, the common power cable 19, and the relay 7. In other words, the battery 5 is charged with electric power from the external power supply 90.

Once the battery 5 reaches full charge, the external power supply 90 disconnects the charging plug 91 from the second charging port 22. The controller 6 opens the relay 7 and closes the flap 23. The controller 6 transmits a command to the lock mechanism 24 to lock the flap 23.

While the flap of any one of the plurality of charging ports (the first charging port 12 and the second charging port 22) is open, the controller 6 locks the flap of the remaining charging port. Through this process, the flaps of the plurality of charging ports are not open at the same time, so high safety is ensured even when the charging port is provided at a location difficult to be visually identified.

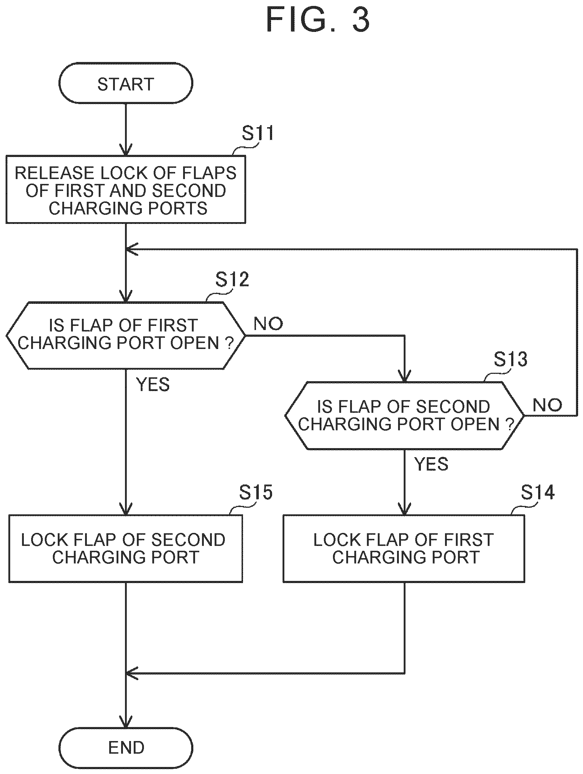

FIG. 3 shows a control flowchart of the flaps of the plurality of charging ports. A process of FIG. 3 is started once a "charge" switch provided at a driver seat of the battery electric vehicle 2 is turned on. The controller 6 starts the process of FIG. 3 once the "charge" switch provided at the driver seat of the battery electric vehicle 2 is turned on.

Initially, the controller 6 releases the lock of the flaps of all the charging ports (the flap 13 of the first charging port 12 and the flap 23 of the second charging port 22) (step S11). As described above, the controller 6 can transmit a command to the lock mechanism 14 to lock the flap 13 or release the lock. The controller 6 also can transmit a command to the lock mechanism 24 to lock the flap 23 or release the lock. Through the process of step S11, the lock of all the flaps is released. The user is allowed to open the flap 13 of the first charging port 12, and the external power supply 90 can open the flap 23 of the second charging port 22 via the controller 6.

The controller 6 monitors the statuses (open-closed states) of the flaps of all the charging ports (step S12 and step S13). As described above, the lock mechanism 14 includes the sensor that detects the open-closed state of the flap 13, the lock mechanism 24 includes the sensor that detects the open-closed state of the flap 23, and data of both sensors is transmitted to the controller 6. When the flap 13 of the first charging port 12 is open (YES in step S12), the controller 6 locks the flap 23 of the second charging port 22 (step S15). When the flap 23 of the second charging port 22 is open (NO in step S12 and YES in step S13), the controller 6 locks the flap 13 of the first charging port 12 (step S14). Until any one of the flaps is opened, the controller 6 continues monitoring the open-closed states of the flaps (NO in step S12 and NO in step S13).

Through the process of FIG. 3, once the flap of any one of the charging ports is opened, the flap of the remaining one of the charging ports is locked. The flaps of the plurality of charging ports are not open at the same time.

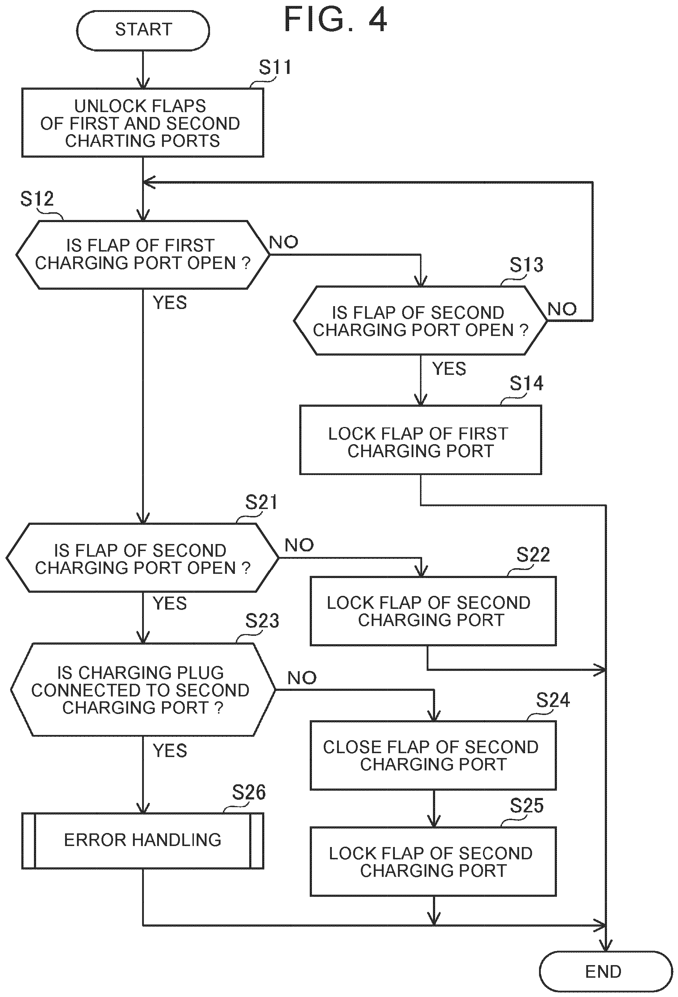

FIG. 4 shows a flowchart of flap control according to a modification. The process of FIG. 4 is a process that can deal with the inconvenience that the flaps of both charging ports are opened due to some reasons. Step S11 to step S14 are the same as those of the flowchart of FIG. 3.

In step S12, when the flap 13 of the first charging port 12 is open (YES in step S12), the controller 6 checks the status of the flap 23 of the second charging port 22 (step S21). When the flap 23 of the second charging port 22 is closed, the controller 6 locks the flap 23 of the second charging port 22 and ends the process (NO in step S21, and step S22).

On the other hand, when the flap 13 of the first charging port 12 is open and the flap 23 of the second charging port 22 is also open (YES in step S12 and YES in S21), the controller 6 checks whether the charging plug 91 is connected to the second charging port 22 (step S23). The case where both the flap 13 of the first charging port 12 and the flap 23 of the second charging port 22 are open is a case where there is some inconvenience. In this case, when the charging plug 91 is not connected to the second charging port 22 (NO in step S23), the controller 6 closes the flap 23 of the second charging port 22 and locks the flap 23 (step S24 and step S25). Through this process, the inconvenience is resolved.

On the other hand, when the charging plug 91 is connected to the second charging port 22 (YES in step S23), the controller 6 executes error handling and ends the process (step S26). The case where step S23 is affirmative is a case where, although the charging plug 91 is connected to the second charging port 22, the user opens the flap 13 of the first charging port 12. In this case, the inconvenience is not resolved, so the controller 6 executes error handling. Error handling is, for example, that the controller 6 opens the relay 7 and outputs notification (warning lamp or warning sound) indicating that there is inconvenience.

Some features of the battery electric vehicle 2 according to the embodiment will be listed below. While any one of the flaps of the plurality of charging ports (the flap 13 of the first charging port 12 and the flap 23 of the second charging port 22) is open, the controller 6 locks the flap of the remaining one of the charging ports. The battery electric vehicle 2 according to the embodiment includes two charging ports (the first charging port 12 and the second charging port 22). In the disclosure of the specification, the battery electric vehicle may include more than two charging ports (and their flaps).

The flap 23 of the second charging port 22 is opened in response to communication (communication related to charging) from the external power supply to the controller 6. The second charging port 22 is provided at the bottom of the battery electric vehicle 2. The second charging port 22 is a charging port for automatic battery charge and is not allowed to be opened by the user. The first charging port 12 is a port for the user to plug the charging plug 81. The flap 13 of the first charging port 12 just needs to be provided at a location other than at the bottom of the battery electric vehicle 2, and the user is able to open the flap 13.

The plurality of charging ports (the first charging port 12 and the second charging port 22) is directly coupled to each other by the common power cable 19. It is possible to reduce cost by using a power cable common to the plurality of charging ports. On the other hand, while the battery 5 is being charged by using any one of the first charging port 12 and the second charging port 22, the flap of the remaining one of the charging ports cannot be opened, so it is possible to ensure high safety.

When the second charging port 22 is provided at the bottom of the battery electric vehicle 2, it is remarkably difficult for the user to touch the second charging port 22. Therefore, when the second charging port 22 is provided at the bottom of the battery electric vehicle 2, the battery electric vehicle 2 may have the following features. In other words, the battery electric vehicle 2 includes the first charging port 12 and the second charging port 22, to which a charging plug of a power supply configured to supply electric power to the battery 5 is allowed to be connected. Each of the first charging port 12 and the second charging port 22 has a corresponding one of the flaps (the flap 13 and the flap 23). The second charging port 22 is disposed at the bottom of the battery electric vehicle 2, and the first charging port 12 is disposed at a location other than at the bottom. The controller 6 locks the flap 13 of the first charging port 12 while the flap 23 of the second charging port 22 is open. The controller 6 does not open the flap 23 of the second charging port 22 while the flap 13 of the first charging port 12 is open.

The battery electric vehicle 2 according to the embodiment includes two charging ports (the first charging port 12 and the second charging port 22). The battery electric vehicle may include three or more charging ports. At least one (second charging port 22) of the plurality of charging ports just needs to be a charging port for automatic battery charge. The flap of the charging port for automatic battery charge is provided with the actuator, and the flap of the charging port for automatic battery charge is opened or closed by remote operation from the external power supply via controller 6. Alternatively, the flap of the charging port for automatic battery charge is opened in response to a command from the controller 6 of the battery electric vehicle. The charging port for automatic battery charge just needs to be provided at the bottom of the battery electric vehicle. The user is able to open the first charging port. The first charging port is disposed at a location other than at the bottom of the battery electric vehicle, for example, the side face or front face or rear face of the battery electric vehicle.

When the flaps of all the charging ports are closed, the flaps of all the charging ports are locked or unlocked in response to a command from the controller 6. In the embodiment, once the "charge" switch provided at the driver seat is turned on, the controller 6 releases the lock of the flaps of all the charging ports. The controller 6 may switch between lock and unlock of the flaps of all the charging ports in interlocking with lock and unlock of doors of the battery electric vehicle 2. In other words, once the doors are locked, the controller 6 locks the flaps of all the charging ports. Once the lock of the doors is released, the controller 6 releases the lock of the flaps of all the charging ports.

The "flap" may be referred to as "charging lid" or "charging port cover".

The "battery electric vehicle" in the specification includes an electric motor that drives wheels and a battery that supplies electric power to the electric motor. The "battery electric vehicle" in the specification can include a hybrid electric vehicle including both an electric motor and an internal combustion engine and a fuel cell electric vehicle including both a battery and a fuel cell as a power supply for an electric motor.

Specific examples of the invention are described in detail above; however, these are only illustrative and are not intended to limit the appended claims. The technology described in the appended claims also encompasses various modifications and changes from the specific examples illustrated above. The technical elements described in the specification or the drawings exhibit technical usability solely or various combinations and are not limited to combinations of the appended claims at the time of filing the application. The technology illustrated in the specification and drawings can achieve multiple purposes at the same time and has technical usability by achieving one of those purposes.

## Claims

1. A battery electric vehicle (2) comprising:
a controller (6);
a battery (5); and
a plurality of charging ports (12, 22) each having a flap (13, 23) and each allowing a charging plug (81, 91) of a power supply (80, 90) to be connected, the power supply (80, 90) being configured to supply electric power to the battery (5), wherein
the controller (6) is configured to, while the flap (13, 23) of any one of the charging ports (12, 22) is open, lock the flap (13, 23) of each remaining charging port (12, 22).

2. The battery electric vehicle (2) according to claim 1, wherein
the controller (6) is configured to open the flap (23) of a second charging port (22) among the plurality of charging ports (12, 22) upon communication from the power supply (90) to the controller (6).

3. The battery electric vehicle (2) according to claim 2, wherein the second charging port (22) is provided at a bottom of the battery electric vehicle (2), and a first charging port (12) among the plurality of charging ports (12, 22) is provided at a location other than the bottom of the battery electric vehicle (2).

4. The battery electric vehicle (2) according to claim 1, wherein at least two of the charging ports (12, 22) are electrically directly connected.
